# EUROPÄISCHE PATENTSCHRIFT

(11) **EP 1 861 300 B1**
(45) Veröffentlichungstag und Bekanntmachung des Hinweises auf die Patenterteilung: **12.07.2017**
(21) Anmeldenummer: 06708343.6
(22) Anmeldetag: 17.02.2006
(51) Int. Cl.: B60T 13/74, B60T 11/06, B60T 7/10

(54) **AKTORVORRICHTUNG**
ACTOR DEVICE
APPAREIL D'ACTIONNEMENT

(30) Priorität: 23.03.2005 EP 05006397
(43) Veröffentlichungstag der Anmeldung: 05.12.2007
(73) Patentinhaber: Continental Automotive GmbH, 30165 Hannover (DE)
(72) Erfinder: MAIER, Alfons, 93077 Bad Abbach (DE); STÜRZER, Jürgen, 94330 Aiterhofen (DE)
(86) Internationale Anmeldenummer: PCT/EP2006/060052
(87) Internationale Veröffentlichungsnummer: WO 2006/100162

(56) Entgegenhaltungen:
- FR-A- 2 720 045
- FR-A- 2 734 227
- US-A- 1 876 542

## Beschreibung

Die Erfindung betrifft eine Aktorvorrichtung, insbesondere eine Aktorvorrichtung für eine elektrisch stellbare Bremse, zum Beispiel eine Handbremse eines Fahrzeugs, die einen elektromotorischen Stellantrieb und eine erste und eine zweite Abtriebswelle umfasst. In D1 (FR2720045) ist eine Aktorvorrichtung gemäß dem Oberbegriff des Anspruchs 1 offenbart. Elektrisch stellbare Bremsen, zum Beispiel in Fahrzeugen, sollen mit einer möglichst gleich großen Bremskraft auf beiden Seiten des Fahrzeugs betrieben werden, um z.B. ein Wegrollen des Fahrzeugs zuverlässig verhindern zu können. Aus Kostengründen und aus Gründen des zur Verfügung stehenden Bauraums wird die Bremskraft jedoch vorzugsweise durch nur einen elektromotorischen Stellantrieb aufgebracht. Ein Drehmoment, das mittels des elektromotorischen Stellantriebs erzeugt wird, ist somit so auf die einander gegenüberliegenden Seiten des Fahrzeugs aufzuteilen, dass die Bremskraft auf beiden Seiten des Fahrzeugs gleich groß ist.

Die Aufgabe der Erfindung ist, eine Aktorvorrichtung zu schaffen, die zuverlässig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch eine Aktorvorrichtung, die einen elektromotorischen Stellantrieb und eine erste und eine zweite Abtriebswelle umfasst. Die Aktorvorrichtung umfasst ferner mindestens ein Stellelement, das mit der ersten Abtriebswelle und/oder mit der zweiten Abtriebswelle gekoppelt ist. Das Stellelement ist ausgebildet zum Koppeln mit einem Übertragungsglied. Im Zusammenwirken mit dem Übertragungsglied wandelt das Stellelement eine rotatorische Bewegung der ersten Abtriebswelle beziehungsweise der zweiten Abtriebswelle in eine lineare Bewegung des Übertragungsglieds. Ferner umfasst die Aktorvorrichtung ein Ausgleichsgetriebe, das eingangsseitig gekoppelt ist mit dem elektromotorischen Stellantrieb und das die erste Abtriebswelle und die zweite Abtriebswelle umfasst. Das Ausgleichsgetriebe ist ausgebildet zum Übertragen und zum Aufteilen eines eingangsseitigen Drehmoments auf die erste Abtriebswelle und die zweite Abtriebswelle. Gemäß der Erfindung die Aktorvorrichtung umfasst die erste Abtriebswelle und/oder die zweite Abtriebswelle jeweils eine Spindel. Dies hat den Vorteil, dass eine Spindel sehr einfach die rotatorische Bewegung der ersten Abtriebswelle und/oder der zweiten Abtriebswelle und entsprechend der zugehörigen Spindel in eine lineare Bewegung, z.B. des Übertragungsglieds, wandeln kann. Das Übertragungsglied ist beispielsweise ein Seil oder ein Gestänge. Ein solches Seil oder Gestänge ist beispielsweise mit einer Bremse gekoppelt und die Bremse wird z.B. durch Zug an dem Seil oder an dem Gestänge betätigt. Das Vorsehen des Ausgleichsgetriebes hat den Vorteil, dass z.B. unterschiedliche Längen, z.B. Toleranzen, und Zug- und/oder Druckkräfte des Übertragungsglieds für die jeweilige Fahrzeugseite zuverlässig ausgeglichen werden können. Nach dem Ausgleichen der Länge kann die Bremse auf der jeweiligen Fahrzeugseite dann mit einer gleich großen Bremskraft betätigt werden. Ferner hat die Aktorvorrichtung den Vorteil, dass sie klein und kompakt ausgebildet werden kann und so nur wenig Bauraum erfordert.

In einer vorteilhaften Ausgestaltung der Aktorvorrichtung ist die erste Abtriebswelle als eine Hohlwelle ausgebildet. Die zweite Abtriebswelle ist in der Hohlwelle drehbar angeordnet. Der Vorteil ist, dass die Aktorvorrichtung so besonders klein und kompakt ausgebildet sein kann. Ferner kann die erste und die zweite Abtriebswelle und das jeweilige, gegebenenfalls vorgesehene Stellelement auf der gleichen Seite des Ausgleichsgetriebes angeordnet sein. Dies hat den Vorteil, dass die Übertragungsglieder, die mit der ersten bzw. mit der zweiten Abtriebswelle gekoppelt sind, in geringem Abstand zueinander parallel geführt sein können. Dadurch ist eine solche Aktorvorrichtung besonders geeignet, beispielsweise in einem Mitteltunnel eines Fahrzeugs in einem Bereich einer Handbremse angeordnet zu werden.

In einer weiteren vorteilhaften Ausgestaltung der Aktorvorrichtung weist die erste Abtriebswelle ein erstes Kegelrad auf. Die zweite Abtriebswelle weist ein zweites Kegelrad auf. Das Ausgleichsgetriebe umfasst ein Getriebegehäuse, das das eingangsseitige Drehmoment aufnimmt. An dem Getriebegehäuse ist mindestens ein Planetenkegelrad drehbar angeordnet, über das das erste Kegelrad und das zweite Kegelrad miteinander gekoppelt sind. Der Vorteil ist, dass ein solches Ausgleichsgetriebe sehr kompakt ausgebildet sein kann. Ferner hat ein solches Ausgleichsgetriebe einen einfachen Aufbau. Ein solches Ausgleichsgetriebe ermöglicht ein zuverlässiges Ausgleichen von unterschiedlichen Längen oder Toleranzen, zum Beispiel der Übertragungsglieder, und der ausgangsseitigen Drehmomente an der ersten und der zweiten Abtriebswelle.

In diesem Zusammenhang ist es vorteilhaft, wenn zwei Planetenkegelräder einander gegenüber auf einer gemeinsamen Rotationsachse angeordnet sind. Der Vorteil ist, dass auftretende Kräfte in dem Ausgleichsgetriebe etwa symmetrisch auf beide Planetenkegelräder aufgeteilt sind. Dadurch ist eine Belastung von Lagern des Ausgleichsgetriebes geringer und die Lebensdauer des Ausgleichsgetriebes kann so größer sein. Ferner kann ein Verkeilen der Kegelräder oder der Planetenkegelräder durch eine unsymmetrische Belastung vermieden werden. Ein solches Ausgleichsgetriebe ist besonders zuverlässig.

In einer weiteren vorteilhaften Ausgestaltung der Aktorvorrichtung ist das Stellelement eine Seilscheibe, die mit einem Seil koppelbar ist. Dieses Seil, das z.B. das Bremsseil ist, bildet das Übertragungsglied beispielsweise zum Übertragen einer Bremskraft auf die Bremse. Eine solche Seilscheibe kann sehr einfach die rotatorische Bewegung der ersten oder der zweiten Abtriebswelle und der an diese gekoppelten Seilscheibe durch Auf- oder Abrollen des Seils in eine lineare Bewegung des Seils wandeln. Die Seilscheibe kann kreisrund oder auch mit einem anderen rotatorischen Profil ausgebildet sein. Die Seilscheibe kann ferner axial oder exzentrisch an der jeweiligen Abtriebswelle angeordnet sein. Ein solches Stellelement ist sehr einfach und preisgünstig.

In diesem Zusammenhang ist es vorteilhaft, wenn die erste Abtriebswelle und die zweite Abtriebswelle jeweils mit einem Stellelement gekoppelt sind, das als Seilscheibe ausgebildet ist. Die Seilscheiben sind so parallel zueinander angeordnet, dass die Seile durch diese in eine gemeinsame Richtung ziehbar sind, wenn die Seilscheiben jeweils mit einem Seil gekoppelt sind. Dies ist besonders vorteilhaft, wenn die Aktorvorrichtung beispielsweise in dem Mitteltunnel des Fahrzeugs in dem Bereich der Handbremse angeordnet ist. Die Seile können dann zum Beispiel parallel zu einer Fahrzeuglängsachse angeordnet sein. Alternativ sind die Seilscheiben so parallel zueinander angeordnet, dass die Seile durch diese in eine einander entgegengesetzte Richtung ziehbar sind, wenn die Seilscheiben jeweils mit einem Seil gekoppelt sind. Dies hat den Vorteil, dass die Aktorvorrichtung beispielsweise an einer Fahrzeugradachse angeordnet sein kann. Die Seile können dann zum Beispiel quer zur Fahrzeuglängsachse angeordnet sein. Der Vorteil ist, dass so besonders kurze Seile genutzt werden können und die Aktorvorrichtung besonders platzsparend an der Fahrzeugradachse angeordnet sein kann. Dadurch kann bei einer Montage des Fahrzeugs beispielsweise die Aktorvorrichtung zusammen mit der Fahrzeugradachse vormontiert werden. Das Nutzen kurzer Bremsseile kann einen höheren Wirkungsgrad zur Folge haben, so dass zum Stellen der Bremse nur eine geringe Leistung des elektromotorischen Stellantriebs erforderlich ist. Dadurch kann die Aktorvorrichtung besonders preisgünstig sein.

In einer weiteren vorteilhaften Ausgestaltung der Aktorvorrichtung sind die erste Abtriebswelle und die zweite Abtriebswelle auf einer gemeinsamen Rotationsachse und abtriebsseitig voneinander abgewandt angeordnet. Dies hat den Vorteil, dass Zugkräfte, die über das jeweilige Übertragungsglied oder Stellelement auf die zugehörige Abtriebswelle übertragen werden, längs der gemeinsamen Rotationsachse wirken. Ferner eignet sich eine solche Aktorvorrichtung besonders zum Anordnen beispielsweise an der Fahrzeugradachse und kann einfach mit dieser vormontiert werden. Eine solche Anordnung ist besonders platzsparend. Ferner können die Übertragungsglieder, z.B. die Bremsseile oder die Gestänge, besonders kurz ausgebildet sein. Dadurch kann ein hoher Wirkungsgrad erzielt werden, so dass die Leistung des elektromotorischen Stellantriebs gering sein kann. Die Aktorvorrichtung ist so besonders preisgünstig.

In einer weiteren vorteilhaften Ausgestaltung der Aktorvorrichtung ist das Ausgleichsgetriebe als ein Stirnraddifferenzialgetriebe ausgebildet. Dies hat den Vorteil, dass beispielsweise unterschiedliche Längen oder Toleranzen der Übertragungsglieder und unterschiedliche Drehmomente an der ersten und an der zweiten Abtriebswelle besonders zuverlässig ausgeglichen werden können. Ferner kann eine solche Aktorvorrichtung besonders klein und kompakt ausgebildet sein.

In diesem Zusammenhang ist es vorteilhaft, wenn das Ausgleichsgetriebe ein Getriebegehäuse umfasst, das das eingangsseitige Drehmoment aufnimmt. An dem Getriebegehäuse ist mindestens ein Stirnradplanetensatz drehbar angeordnet. Der mindestens eine Stirnradplanetensatz koppelt die erste Abtriebswelle und die zweite Abtriebswelle miteinander. Ein solches Ausgleichsgetriebe kann besonders klein und kompakt ausgebildet sein.

In diesem Zusammenhang ist es weiter vorteilhaft, wenn das Ausgleichsgetriebe mindestens drei Stirnradplanetensätze umfasst. Die Stirnradplanetensätze sind gleichmäßig um die erste Abtriebswelle und die zweite Abtriebswelle angeordnet. Dies hat den Vorteil, dass Lager des Ausgleichsgetriebes gleichmäßig und wenig belastet werden. Dies ermöglicht eine lange Lebensdauer des Ausgleichsgetriebes.

In einer weiteren vorteilhaften Ausgestaltung der Aktorvorrichtung ist die Aktorvorrichtung so ausgebildet, dass die erste Abtriebswelle und die zweite Abtriebswelle in einer ersten Antriebsrichtung des elektromotorischen Stellantriebs zueinander verdrehbar sind und in einer zweiten Antriebsrichtung des elektromotorischen Stellantriebs fest zueinander positioniert sind. Der Vorteil ist, dass das Ausgleichen unterschiedlicher Längen und Drehmomente nur in einer Antriebsrichtung wirksam ist. Dies ist beispielsweise dann vorteilhaft, wenn zwei Seile oder Gestänge gleichmäßig angezogen werden sollen. In der entgegengesetzten Antriebsrichtung kann es jedoch vorteilhaft sein, die Seile beziehungsweise Gestänge ohne Ausgleich der Längen oder Kräfte zu lösen.

Ausführungsbeispiele der Erfindung sind im Folgenden anhand der schematischen Zeichnungen erläutert.

Es zeigen:
Figur 1A eine erste Anordnung einer Aktorvorrichtung in einem Fahrzeug,
Figur 1B eine zweite Anordnung der Aktorvorrichtung in dem Fahrzeug,
Figur 2 eine erste Ausführungsform der Aktorvorrichtung,
Figur 3 einen Teil der ersten Ausführungsform der Aktorvorrichtung,
Figur 4 einen Querschnitt durch ein erstes Ausgleichsgetriebe,
Figur 5B, B eine erste Anordnung von Stellelementen,
Figur 6A, B eine zweite Anordnung der Stellelemente,
Figur 7 eine zweite Ausführungsform der Aktorvorrichtung,
Figur 8 ein zweites Ausgleichsgetriebe,
Figur 9 einen Teil des zweiten Ausgleichsgetriebes,
Figur 10 einen weiteren Teil des zweiten Ausgleichsgetriebes.

Elemente gleicher Konstruktion oder Funktion sind figurenübergreifend mit den gleichen Bezugszeichen versehen.

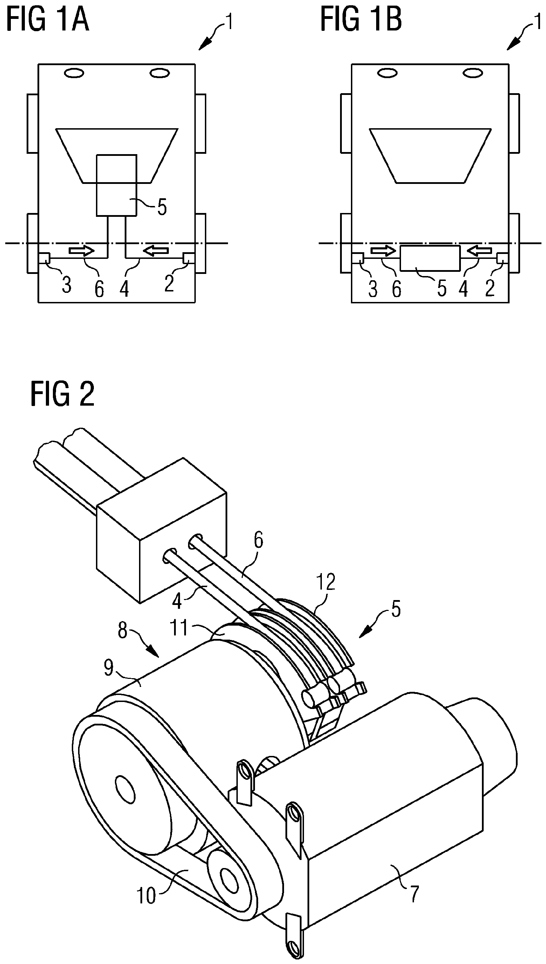

Figur 1a zeigt ein Fahrzeug 1, das an einer hinteren Fahrzeugradachse für ein Rad an der rechten Fahrzeugseite eine erste Bremse 2 und für ein Rad an der linken Fahrzeugseite eine zweite Bremse 3 aufweist. Die erste Bremse 2 ist über ein erstes Bremsseil 4 mit einer Aktorvorrichtung 5 gekoppelt, die beispielsweise ein Teil einer elektrisch stellbaren Bremse, insbesondere einer elektronischen Handbremse, des Fahrzeugs 1 ist. Entsprechend ist die zweite Bremse 3 über ein zweites Bremsseil 6 mit der Aktorvorrichtung 5 gekoppelt. Die Aktorvorrichtung 5 ist beispielsweise in einem Mittelkanal des Fahrzeugs 1, z.B. in einem Bereich einer Handbremse angeordnet.

Alternativ kann die Aktorvorrichtung 5 jedoch auch in einem Bereich einer Fahrzeugradachse, beispielsweise der hinteren Fahrzeugradachse des Fahrzeugs 1, angeordnet sein (Figur 1b). Die Aktorvorrichtung 5 ist dazu bevorzugt an der Fahrzeugradachse des Fahrzeugs 1 montiert. Dies hat den Vorteil, dass eine solche Anordnung aus Fahrzeugradachse und Aktorvorrichtung 5 für eine Montage des Fahrzeugs 1 vormontiert werden kann. Dies kann die Montage des Fahrzeugs 1 vereinfachen. Die Aktorvorrichtung 5 kann jedoch ebenso an einem Chassis des Fahrzeugs 1 montiert sein. Das erste Bremsseil 4 und das zweite Bremsseil 6 erstrecken sich parallel zu der Fahrzeugradachse des Fahrzeugs 1 in einander entgegengesetzte Richtungen und somit quer zu einer Fahrzeuglängsachse.

Das erste Bremsseil 4 und das zweite Bremsseil 6 sollen durch die Aktorvorrichtung 5 eine vorgegebene Wegstrecke bewegt und/oder mit einer vorgegebenen Kraft gespannt werden können, um die erste Bremse 2 und die zweite Bremse 3 zuverlässig betätigen zu können.

In einer ersten Ausführungsform der Aktorvorrichtung 5 umfasst die Aktorvorrichtung 5 einen elektromotorischen Stellantrieb 7 und ein erstes Ausgleichsgetriebe 8 (Figur 2). Das erste Ausgleichsgetriebe 8 umfasst ein Getriebegehäuse 9, das mit dem elektromotorischen Stellantrieb 7 über einen Treibriemen 10 gekoppelt ist. Das Getriebegehäuse 9 und der elektromotorische Stellantrieb 7 können jedoch auch anders miteinander gekoppelt sein, z.B. über Zahnräder oder über ein Schneckengetriebe. Das Getriebegehäuse 9 bildet einen Eingang für ein Drehmoment, das durch den elektromotorischen Stellantrieb 7 bereitgestellt wird, wenn dieser geeignet bestromt wird.

Die Aktorvorrichtung 5 umfasst ferner zwei Stellelemente, die als erste Seilscheibe 11 und als zweite Seilscheibe 12 ausgebildet sind. Die erste Seilscheibe 11 oder die zweite Seilscheibe 12 können kreisrund ausgebildet sein, sie können jedoch auch eine beliebige andere geeignete Kontur in rotatorischer Richtung aufweisen. Die erste Seilscheibe 11 und die zweite Seilscheibe 12 sind so ausgebildet, dass das erste Bremsseil 4 und das zweite Bremsseil 6 jeweils mit einer der Seilscheiben koppelbar ist. Ferner sind die erste Seilscheibe 11 und die zweite Seilscheibe 12 so ausgebildet, dass das erste Bremsseil 4 bzw. das zweite Bremsseil 6 durch ein Verdrehen der ersten Seilscheibe 11 beziehungsweise der zweiten Seilscheibe 12 auf die jeweilige Seilscheibe aufgerollt oder von dieser abgerollt werden kann. Dadurch kann sehr einfach eine rotatorische Bewegung der ersten Seilscheibe 11 oder der zweiten Seilscheibe 12 in eine lineare Bewegung des ersten Bremsseils 4 oder des zweiten Bremsseil 6 gewandelt werden. Das erste Bremsseil 4 und das zweite Bremsseil 6 können auch als Übertragungselemente bezeichnet werden, die ausgebildet sind zum Übertragen einer Kraft, die durch die Aktorvorrichtung 5 erzeugt werden kann, auf die erste Bremse 2 oder die zweite Bremse 3.

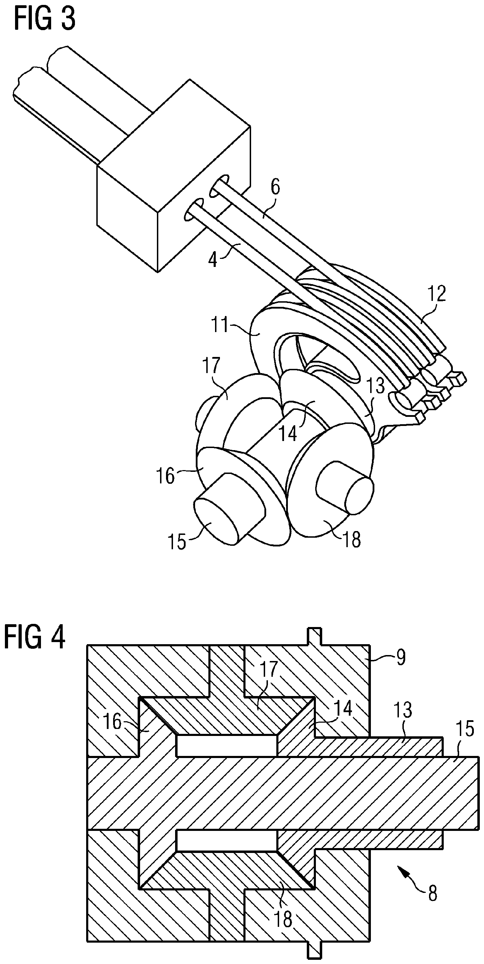

Das erste Ausgleichsgetriebe 8 umfasst eine erste Abtriebswelle 13, die als eine Hohlwelle ausgebildet ist (Figur 3 und Figur 4). Die erste Seilscheibe 11 ist mit der ersten Abtriebswelle 13 gekoppelt. Die erste Abtriebswelle 13 umfasst ein erstes Kegelrad 14. Das erste Ausgleichsgetriebe 8 umfasst ferner eine zweite Abtriebswelle 15, die koaxial zu der ersten Abtriebswelle 13 in dieser drehbar angeordnet ist. Die zweite Seilscheibe 12 ist mit der zweiten Abtriebswelle 15 gekoppelt. Die zweite Abtriebswelle 15 umfasst ein zweites Kegelrad 16. Die erste Seilscheibe 11 oder die zweite Seilscheibe 12 sind zentriert zu der ersten Abtriebswelle 13 bzw. zu der zweiten Abtriebswelle 15 angeordnet, können jedoch auch exzentrisch zu diesen angeordnet sein.

Das erste Ausgleichsgetriebe 8 umfasst ferner ein erstes Planetenkegelrad 17 und ein zweites Planetenkegelrad 18. Das erste Planetenkegelrad 17 und das zweite Planetenkegelrad 18 sind längs einer gemeinsamen Rotationsachse angeordnet, die senkrecht zu einer Rotationsachse der ersten Abtriebswelle 13 und der zweiten Abtriebswelle 15 verläuft. Das erste Planetenkegelrad 17 und das zweite Planetenkegelrad 18 sind so angeordnet, dass über diese das erste Kegelrad 14 der ersten Abtriebswelle 13 und das zweite Kegelrad 16 der zweiten Abtriebswelle 15 miteinander gekoppelt sind. Das erste Planetenkegelrad 17 und das zweite Planetenkegelrad 18 sind ferner drehbar in dem Getriebegehäuse 9 gelagert.

Es können auch nur ein Planetenkegelrad oder auch mehr als zwei Planetenkegelräder in dem ersten Ausgleichsgetriebe 8 vorgesehen sein. Eine symmetrische Anordnung der Planetenkegelräder ist jedoch besonders vorteilhaft, da auftretende Kräfte oder Drehmomente so gleichmäßig auf die Planetenkegelräder verteilt sein können. Dies kann eine Belastung der Lager verringern und so die Lebensdauer des ersten Ausgleichsgetriebes 8 erhöhen.

Das erste Kegelrad 14, das zweite Kegelrad 16, das erste Planetenkegelrad 17 und das zweite Planetenkegelrad 18 weisen vorzugsweise eine Verzahnung auf, um die jeweiligen Drehmomente zuverlässig zwischen dem ersten Kegelrad 14, dem zweiten Kegelrad 16, dem ersten Planetenkegelrad 17 und dem zweiten Planetenkegelrad 18 übertragen zu können.

Das erste Ausgleichsgetriebe ist so ausgebildet, dass diejenige Abtriebswelle bevorzugt durch den elektromotorischen Stellantrieb 7 über das Getriebegehäuse 9, das erste Planetenkegelrad 17 und das zweite Planetenkegelrad 18 angetrieben wird, an der ein geringeres Drehmoment dem Antrieb entgegenwirkt. Dies ist beispielsweise dann der Fall, wenn das Bremsseil an einer der Seilscheiben straff gespannt ist, das andere Bremsseil an der anderen Seilscheibe jedoch nicht straff gespannt ist. Der Ausgleich erfolgt so, dass beide Bremsseile etwa gleich straff gespannt sind. So kann sichergestellt werden, dass über das erste Bremsseil 4 und das zweite Bremsseil 6 eine etwa gleich große Bremskraft auf die erste Bremse 2 und die zweite Bremse 3 übertragen wird.

Die zweite Abtriebswelle 15 kann auch so ausgebildet sein, dass die zweite Seilscheibe 12 an einem der ersten Abtriebswelle 13 abgewandten axialen Ende der zweiten Abtriebswelle 15 angeordnet sein kann. Der Vorteil ist, dass die erste Abtriebswelle 13 nicht als Hohlwelle ausgebildet sein muss und dass gegebenenfalls die erste Abtriebswelle 13 und die zweite Abtriebswelle 15 gleich ausgebildet sein können. Dadurch sind weniger voneinander unterschiedliche Bauelemente erforderlich, so dass das erste Ausgleichsgetriebe 8 besonders preisgünstig sein kann.

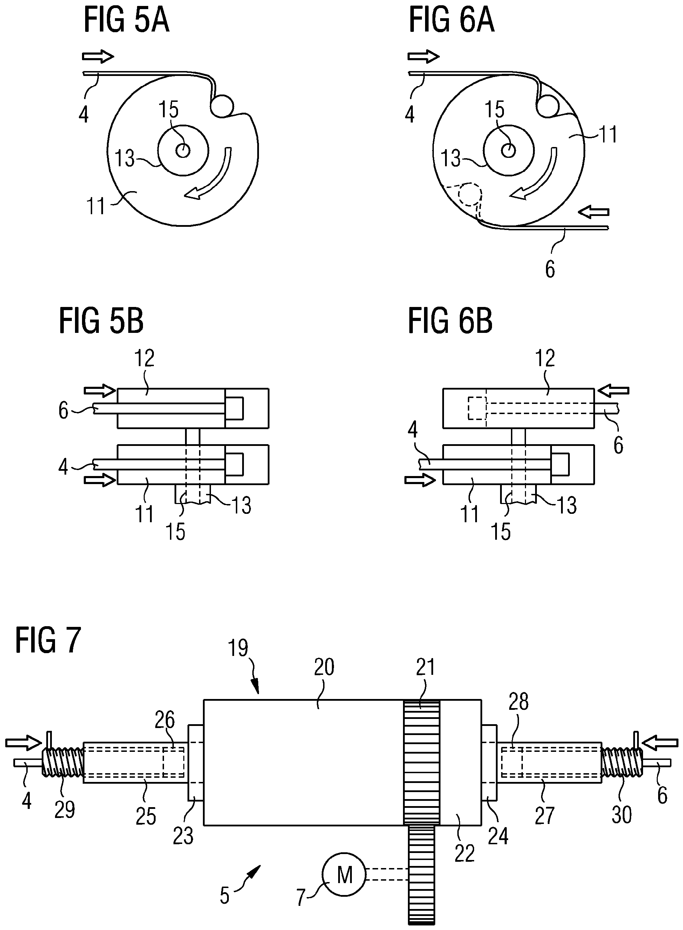

Figur 5a und Figur 5b zeigen eine erste Anordnung der ersten Seilscheibe 11 und der zweiten Seilscheibe 12. In dieser ersten Anordnung können das erste Bremsseil 4 und das zweite Bremsseil 6 parallel zueinander und in die gleiche Richtung gezogen werden. Diese erste Anordnung ist besonders geeignet zum Anordnen der Aktorvorrichtung 5 beispielsweise in dem Mittelkanal des Fahrzeugs 1 (Figur 1a).
Figur 6a und Figur 6b zeigen entsprechend eine zweite Anordnung, in der die erste Seilscheibe 11 und die zweite Seilscheibe 12 so angeordnet sind, dass das erste Bremsseil 4 und das zweite Bremsseil 6 in einander entgegengesetzte Richtungen gezogen werden können. Dazu ist die zweite Seilscheibe 12 beispielsweise um etwa 180 Grad verdreht zu der ersten Seilscheibe 11 angeordnet. Diese zweite Anordnung ist besonders geeignet zum Anordnen der Aktorvorrichtung 5 in dem Bereich der Fahrzeugradachse (Figur 1b). Die Aktorvorrichtung 5 ist in der zweiten Anordnung gegenüber der ersten Anordnung entsprechend um 90 Grad verdreht in dem Fahrzeug 1 angeordnet.

In einer zweiten Ausführungsform der Aktorvorrichtung 5 umfasst die Aktorvorrichtung 5 den elektromotorischen Stellantrieb 7 und ein zweites Ausgleichsgetriebe 19, das ein Getriebegehäuse 20 umfasst (Figur 7). Das Getriebegehäuse 20 ist mit einer Verzahnung 21 versehen. Der elektromotorische Stellantrieb 7 ist beispielsweise über ein oder mehrere Zahnräder mit dem Getriebegehäuse 20 des zweiten Ausgleichsgetriebes 19 in einem Bereich der Verzahnung 21 gekoppelt. Der elektromotorische Stellantrieb 7 kann jedoch auch anders mit dem Getriebegehäuse 20 gekoppelt sein, z.B. über den Treibriemen 10. An dem Getriebegehäuse 20 ist eine Gehäusekappe 22 angeordnet. An der der Gehäusekappe 22 entgegengesetzten Seite des Getriebegehäuses 20 ist ein erstes Lager 23 vorgesehen. In der Gehäusekappe 22 ist entsprechend ein zweites Lager 24 vorgesehen.

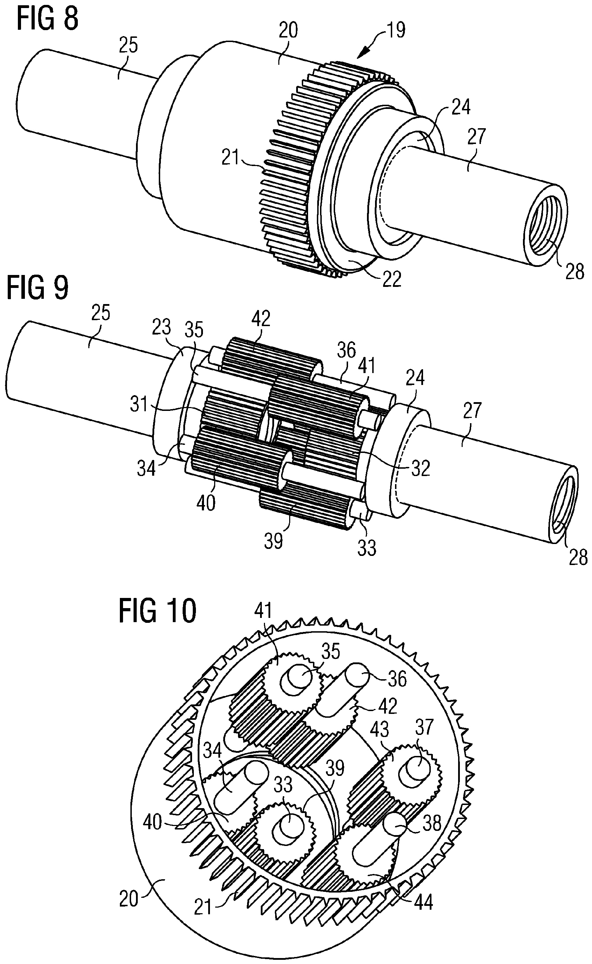

Das zweite Ausgleichsgetriebe 19 umfasst zwei Abtriebswellen, die in ihrer Funktion in der Aktorvorrichtung 5 der ersten Abtriebswelle 13 und der zweiten Abtriebswelle 15 entsprechen, die jedoch jeweils eine Spindel umfassen oder als eine Spindel ausgebildet sind (Figur 7 und Figur 8). Eine erste Spindel 25 weist ein erstes Innengewinde 26 auf und ist in dem ersten Lager 23 gelagert. Entsprechend weist eine zweite Spindel 27 ein zweites Innengewinde 28 auf und ist in dem zweiten Lager 24 gelagert. In das erste Innengewinde 26 der ersten Spindel 25 ist eine erste Spindelschraube 29 eingeschraubt, die rotatorisch fest positioniert, z.B. an einem gegebenenfalls vorgesehenen Gehäuse der Aktorvorrichtung 5, und axial verschiebbar angeordnet ist. Die erste Spindelschraube 29 ist so ausgebildet, dass diese mit dem ersten Bremsseil 4 koppelbar ist. Entsprechend ist in das zweite Innengewinde 28 der zweiten Spindel 27 eine zweite Spindelschraube 30 eingeschraubt, die rotatorisch fest positioniert und axial verschiebbar angeordnet ist. Die zweite Spindelschraube 30 ist so ausgebildet, dass diese mit dem zweiten Bremsseil 6 koppelbar ist.

Die erste Spindel 25 oder die zweite Spindel 27 können auch mit einem Außengewinde versehen sein. Entsprechend können die erste Spindelschraube 29 und die zweite Spindelschraube 30 auch als eine Spindelmutter ausgebildet sein und auf das jeweilige Außengewinde der ersten Spindel 25 oder der zweiten Spindel 27 aufgeschraubt sein.

Die Abtriebswellen, denen die erste Spindel 25 bzw. die zweite Spindel 27 zugeordnet sind, sind längs einer gemeinsamen Rotationsachse und vorzugsweise axial fest positioniert angeordnet, d.h. axial nicht verschiebbar. Die erste Spindelschraube 29 und die zweite Spindelschraube 30 sind so angeordnet, dass diese mit dem jeweiligen Bremsseil in einander entgegengesetzte Richtungen weisen. Somit ist diese Ausführungsform besonders geeignet, in dem Bereich der Fahrzeugradachse des Fahrzeugs 1 angeordnet zu werden (Figur 1b).

Die Abtriebswelle, der die erste Spindel 25 zugeordnet ist, weist in einem Bereich ihrer Mantelfläche an einem der zweiten Spindel 27 zugewandten axialen Ende eine Verzahnung 31 auf, die in Längsrichtung ausgebildet ist (Figur 9). Entsprechend weist die Abtriebswelle, der die zweite Spindel 27 zugeordnet ist, in einem Bereich ihrer Mantelfläche an einem der ersten Spindel 25 zugewandten axialen Ende eine Verzahnung 32 auf, die in Längsrichtung ausgebildet ist.

An dem Getriebegehäuse 20 und/oder an der Gehäusekappe 22 sind eine erste Achse 33, eine zweite Achse 34, eine dritte Achse 35, eine vierte Achse 36, eine fünfte Achse 37 und eine sechste Achse 38 in Längsrichtung parallel zu den Abtriebswellen angeordnet und gelagert (Figur 9 und Figur 10). Auf der ersten Achse 33 ist ein erster Stirnradplanet 39 angeordnet. Auf der zweite Achse 34 ist entsprechend ein zweiter Stirnradplanet 40 angeordnet. Der erste Stirnradplanet 39 und der zweite Stirnradplanet 40 bilden einen Stirnradplanetensatz. Der erste Stirnradplanet 39 und der zweite Stirnradplanet 40 sind miteinander gekoppelt. Entsprechend sind ein dritter Stirnradplanet 41 und ein vierter Stirnradplanet 42 vorgesehen, die auf der dritten Achse 35 und der vierten Achse 36 angeordnet sind und die einen zweiten Stirnradplanetensatz bilden, und ein fünfter Stirnradplanet 43 und ein sechster Stirnradplanet 44, die auf der fünften Achse 37 und der sechsten Achse 38 angeordnet sind und die einen dritten Stirnradplanetensatz bilden. Der erste Stirnradplanet 39, der dritte Stirnradplanet 41 und der fünfte Stirnradplanet 43 sind jeweils mit der zweiten Spindel 27 in dem Bereich der Verzahnung 32 gekoppelt. Entsprechend ist der zweite Stirnradplanet 40, der vierte Stirnradplanet 42 und der sechste Stirnradplanet 44 mit der ersten Spindel 25 in dem Bereich der Verzahnung 31 gekoppelt. Die jeweiligen Stirnradplaneten eines Stirnradplanetensatzes sind dazu axial gegeneinander versetzt auf ihrer jeweiligen Achse angeordnet. Das zweite Ausgleichsgetriebe 19 ist als ein Stirnraddifferenzialgetriebe ausgebildet.

Das zweite Ausgleichsgetriebe 19 kann auch nur ein oder zwei oder auch mehr als drei Stirnradplanetensätze aufweisen. Es ist jedoch vorteilhaft, mindestens drei Stirnradplanetensätze vorzusehen. Dadurch kann eine Belastung des ersten Lagers 23 und des zweiten Lagers 24 geringer oder gleichmäßiger sein als mit nur einem oder zwei Stirnradplanetensätzen.

Das Getriebegehäuse 20 wird durch den elektromotorischen Stellantrieb 7 in einer von zwei möglichen Antriebsrichtungen angetrieben, wenn dieser geeignet bestromt wird. Ist ein Drehmoment, das beispielsweise über das erste Bremsseil 4 und die erste Spindelschraube 29 auf die erste Spindel 25 übertragen wird und das entgegen der Antriebsrichtung wirkt, kleiner als ein Drehmoment, das über das zweite Bremsseil 6 und die zweite Spindelschraube 30 auf die zweite Spindel 27 übertragen wird und das entgegen der Antriebsrichtung wirkt, dann wird vorzugsweise so lange nur die erste Spindel 25 angetrieben, bis das Drehmoment der ersten Spindel 25 und das Drehmoment der zweiten Spindel 27 etwa gleich groß sind. Dann können sowohl die erste Spindel 25 als auch die zweite Spindel 27 über das Getriebegehäuse 20 angetrieben werden und ein Drehmoment, das von dem elektromotorischen Stellantrieb 7 auf das Getriebegehäuse 20 übertragen wird, wird etwa zu gleichen Teilen auf die erste Spindel 25 und die zweite Spindel 27 übertragen. Entsprechend wird vorzugsweise nur die zweite Spindel 27 angetrieben, so lange das Drehmoment der zweiten Spindel 27 kleiner ist als das Drehmoment der ersten Spindel 25. Dadurch ist es beispielsweise möglich, unterschiedliche Längen des ersten Bremsseils 4 oder des zweiten Bremsseil 6 oder Toleranzen z.B. der ersten Bremse 2 oder der zweiten Bremse 3 auszugleichen und eine etwa gleich große Zugkraft oder Bremskraft auf das erste Bremsseil 4 und das zweite Bremsseil 6 bzw. die erste Bremse 2 und die zweite Bremse 3 auszuüben.

Alternativ oder in Kombination mit dem ersten Bremsseil 4 und dem zweiten Bremsseil 6 kann jeweils auch ein geeignet ausgebildetes Gestänge als Übertragungsglied genutzt werden. Ein Gestänge kann so ausgebildet sein, dass über dieses beispielsweise auch Schubkräfte übertragen werden können. Ferner können alternativ zu der Abtriebswelle mit der ersten Spindel 25 und mit der ersten Spindelschraube 29 und zu der Abtriebswelle mit der zweiten Spindel 27 und mit der zweiten Spindelschraube 30 die Abtriebswellen auch mit anderen Stellelementen als der ersten Spindelschraube 29 und der zweiten Spindelschraube 30 gekoppelt sein, z.B. mit Seilscheiben.

Vorzugsweise sind das erste Lager 23 und das zweite Lager 24 jeweils als ein Freilauflager ausgebildet. Dadurch ist es möglich, dass die erste Spindel 25 und die zweite Spindel 27 in einer ersten Antriebsrichtung des elektromotorischen Stellantriebs zueinander verdrehbar sind, wenn die resultierenden, an der ersten Spindel 25 und der zweiten Spindel 27 wirkenden Drehmomente unterschiedlich sind, und in einer zweiten Antriebsrichtung des elektromotorischen Stellantriebs 7 fest zueinander positioniert sind. Das Ausgleichen von unterschiedlichen Längen des ersten Bremsseils 4 und des zweiten Bremsseils 6 bzw. entsprechender Gestänge und von unterschiedlich großen Drehmomenten der ersten Spindel 25 und der zweiten Spindel 27 ist somit nur in der ersten Antriebsrichtung des elektromotorischen Stellantriebs möglich. Vorzugsweise entspricht die erste Antriebsrichtung des elektromotorischen Stellantriebs einer Zugrichtung, mit der die erste Bremse 2 und die zweite Bremse 3 angezogen werden, so dass das Fahrzeug 1 an einem Wegrollen gehindert werden kann. Die zweite Antriebsrichtung des elektromotorischen Stellantriebs 7 entspricht dann einer Löserichtung, die zum Lösen der ersten Bremse 2 und der zweiten Bremse 3 genutzt wird, um ein Fahren des Fahrzeugs 1 zu ermöglichen. Bei dem Lösen der ersten Bremse 2 und der zweiten Bremse 3 ist es vorteilhaft, wenn beide Bremsen gleich gelöst werden. Dies ist insbesondere dann vorteilhaft, wenn eine der beiden Bremsen oder Bremsseile festhängt, zum Beispiel durch Einfrieren im Winter oder durch Fehlfunktion, da dann das zweite Ausgleichsgetriebe 19 nur die jeweils andere Bremse lösen würde. Durch Nutzen von Freilauflagern ist es möglich, ein unsymmetrisches Lösen der Bremsen zu verhindern.

Vorzugsweise ist die Aktorvorrichtung 5 so ausgebildet, dass das Drehmoment, das an der ersten Abtriebswelle 13 oder der zweiten Abtriebswelle 15 bzw. an der ersten Spindel 25 oder der zweiten Spindel 27 wirkt, nicht zu einem Verstellen der Aktorvorrichtung 5 führt, d.h. dass eine rotatorische Position der ersten Abtriebswelle 13 und der zweiten Abtriebswelle 15 bzw. der ersten Spindel 25 und der zweiten Spindel 27 erhalten bleibt, solange der elektromotorische Stellantrieb 7 nicht zum Verstellen der ersten Abtriebswelle 13 und der zweiten Abtriebswelle 15 bzw. der ersten Spindel 25 und der zweiten Spindel 27 bestromt wird. Dies kann beispielsweise durch eine Selbsthemmung oder durch einen Sperr- oder Bremsmechanismus erreicht werden, die bzw. der in der Aktorvorrichtung 5 vorgesehen ist, beispielsweise in dem elektromotorischen Stellantrieb 7. Bevorzugt ist jedoch eine Haltebremsvorrichtung vorgesehen, die vorzugsweise so zwischen dem elektromotorischen Stellantrieb 7 und dem ersten Ausgleichsgetriebe 8 bzw. dem zweiten Ausgleichsgetriebe 19 angeordnet ist, dass die Haltebremsvorrichtung eingangsseitig mit dem elektromotorischen Stellantrieb 7 gekoppelt ist und ausgangsseitig mit dem ersten Ausgleichsgetriebe 8 bzw. dem zweiten Ausgleichsgetriebe 19 gekoppelt ist.

Sowohl die erste Ausführungsform als auch die zweite Ausführungsform der Aktorvorrichtung 5 ist geeignet, mit nur einem Abtrieb, d.h. auch mit nur einem Stellelement, betrieben zu werden. Durch ein Fixieren der ersten Abtriebswelle 13 oder der zweiten Abtriebswelle 15 oder entsprechend der ersten Spindel 25 oder der zweiten Spindel 27 an dem gegebenenfalls vorgesehenen Gehäuse der Aktorvorrichtung 5 kann erreicht werden, dass das eingangsseitige Drehmoment, das von dem elektromotorischen Stellantrieb 7 auf das Getriebegehäuse 9 des ersten Ausgleichsgetriebes 8 oder auf das Getriebegehäuse 20 des zweiten Ausgleichsgetriebes 19 übertragen wird, an dem einen Abtrieb zur Verfügung steht. Dies hat den Vorteil, dass die Aktorvorrichtung 5 sehr einfach auch für derartige Anwendungen nutzbar ist, die nur einen Abtrieb erfordern, d.h. die beispielsweise nur ein Bremsseil aufweisen.

Ferner kann sowohl die erste Ausführungsform als auch die zweite Ausführungsform der Aktorvorrichtung 5 nicht nur in Fahrzeugen eingesetzt werden, sondern überall dort, wo eine möglichst gleich große lineare Zugkraft oder Schubkraft an zwei Abtrieben benötigt wird und dazu gegebenenfalls Toleranzen, wie z.B. unterschiedliche Längen der Übertragungsglieder, ausgeglichen werden sollen.

## Patentansprüche

1. Aktorvorrichtung, die umfasst
- einen elektromotorischen Stellantrieb (7),
- eine erste Abtriebswelle (13) und eine zweite Abtriebswelle (15),
- mindestens ein Stellelement, das mit der ersten Abtriebswelle (13) und/oder mit der zweiten Abtriebswelle (15) gekoppelt ist und das ausgebildet ist zum Koppeln mit einem Übertragungsglied und das im Zusammenwirken mit dem Übertragungsglied eine rotatorische Bewegung der ersten Abtriebswelle (13) bzw. der zweiten Abtriebswelle (15) in eine lineare Bewegung des Übertragungsglieds wandelt, und
- ein Ausgleichsgetriebe, das eingangsseitig gekoppelt ist mit dem elektromotorischen Stellantrieb (7) und das die erste Abtriebswelle (13) und die zweite Abtriebswelle (15) umfasst und das ausgebildet ist zum Übertragen und zum Aufteilen eines eingangsseitigen Drehmoments auf die erste Abtriebswelle (13) und die zweite Abtriebswelle (15),
**dadurch gekennzeichnet, dass** die erste Abtriebswelle (13) und/oder die zweite Abtriebswelle (15) jeweils eine Spindel umfassen.

2. Aktorvorrichtung nach Anspruch 1, bei der die erste Abtriebswelle (13) und die zweite Abtriebswelle (15) auf einer gemeinsamen Rotationsachse und abtriebsseitig voneinander abgewandt angeordnet sind.

3. Aktorvorrichtung nach einem der vorstehenden Ansprüche, die so ausgebildet ist, dass die erste Abtriebswelle (13) und die zweite Abtriebswelle (15) in einer ersten Antriebsrichtung des elektromotorischen Stellantriebs (7) zueinander verdrehbar sind und in einer zweiten Antriebsrichtung des elektromotorischen Stellantriebs (7) fest zueinander positioniert sind.

4. Aktorvorrichtung nach einem der vorstehenden Ansprüche, bei der die erste Abtriebswelle (13) als eine Hohlwelle ausgebildet ist und bei der die zweite Abtriebswelle (15) in der Hohlwelle drehbar angeordnet ist.

5. Aktorvorrichtung nach einem der vorstehenden Ansprüche, bei der die erste Abtriebswelle (13) ein erstes Kegelrad (14) aufweist und die zweite Abtriebswelle (15) ein zweites Kegelrad (16) aufweist und bei der das Ausgleichsgetriebe ein Getriebegehäuse umfasst, das das eingangsseitige Drehmoment aufnimmt und an dem mindestens ein Planetenkegelrad drehbar angeordnet ist, über das das erste Kegelrad (14) und das zweite Kegelrad (16) miteinander gekoppelt sind.

6. Aktorvorrichtung nach Anspruch 5, bei der zwei Planetenkegelräder einander gegenüber auf einer gemeinsamen Rotationsachse angeordnet sind.

7. Aktorvorrichtung nach einem der Ansprüche 1 bis 5, bei der das Ausgleichsgetriebe als ein Stirnraddifferenzialgetriebe ausgebildet ist.

8. Aktorvorrichtung nach Anspruch 7, bei der das Ausgleichsgetriebe ein Getriebegehäuse umfasst, das das eingangsseitige Drehmoment aufnimmt und an dem mindestens ein Stirnradplanetensatz drehbar angeordnet ist, der die erste Abtriebswelle (13) und die zweite Abtriebswelle (15) miteinander koppelt.

9. Aktorvorrichtung nach Anspruch 8, bei der das Ausgleichsgetriebe mindestens drei Stirnradplanetensätze umfasst, die gleichmäßig um die erste Abtriebswelle (13) und die zweite Abtriebswelle (15) angeordnet sind.

## Claims

1. Actuator apparatus which comprises
- an electric-motor actuating drive (7),
- a first output shaft (13) and a second output shaft (15),
- at least one actuating element which is coupled to the first output shaft (13) and/or to the second output shaft (15) and is configured for coupling to a transmission member, and which, in interaction with the transmission member, converts a rotational movement of the first output shaft (13) and/or the second output shaft (15) into a linear movement of the transmission member, and
- a differential gear which is coupled on the input side to the electric-motor actuating drive (7) and which comprises the first output shaft (13) and the second output shaft (15), and which is configured for transmitting and for dividing an input-side torque to the first output shaft (13) and the second output shaft (15),
**characterized in that** the first output shaft (13) and/or the second output shaft (15) comprise/comprises in each case one spindle.

2. Actuator apparatus according to Claim 1, in which the first output shaft (13) and the second output shaft (15) are arranged on a common rotational axis and facing away from one another on the output side.

3. Actuator apparatus according to either of the preceding claims, which is configured in such a way that the first output shaft (13) and the second output shaft (15) can be rotated with respect to one another in a first drive direction of the electric-motor actuating drive (7) and are positioned fixedly with respect to one another in a second drive direction of the electric-motor actuating drive (7).

4. Actuator apparatus according to one of the preceding claims, in which the first output shaft (13) is configured as a hollow shaft, and in which the second output shaft (15) is arranged rotatably in the hollow shaft.

5. Actuator apparatus according to one of the preceding claims, in which the first output shaft (13) has a first bevel gear (14) and the second output shaft (15) has a second bevel gear (16), and in which the differential gear comprises a gear housing which receives the input-side torque and on which at least one planetary bevel gear is arranged rotatably, via which the first bevel gear (14) and the second bevel gear (16) are coupled to one another.

6. Actuator apparatus according to Claim 5, in which two planetary bevel gears are arranged opposite one another on a common rotational axis.

7. Actuator apparatus according to one of Claims 1 to 5, in which the differential gear is configured as a spur gear differential transmission.

8. Actuator apparatus according to Claim 7, in which the differential gear comprises a gear housing which receives the input-side torque and on which at least one spur gear planetary set is arranged rotatably which couples the first output shaft (13) and the second output shaft (15) to one another.

9. Actuator apparatus according to Claim 8, in which the differential gear comprises at least three spur gear planetary sets which are arranged uniformly around the first output shaft (13) and the second output shaft (15).

## Revendications

1. Dispositif d'actionnement, comprenant :
- un entraînement de commande par moteur électrique (7),
- un premier arbre de sortie (13) et un deuxième arbre de sortie (15),
- au moins un élément de commande qui est accouplé au premier arbre de sortie (13) et/ou au deuxième arbre de sortie (15) et qui est réalisé de manière à s'accoupler avec un organe de transmission et qui convertit, par coopération avec l'organe de transmission, un mouvement de rotation du premier arbre de sortie (13) ou du deuxième arbre de sortie (15) en un mouvement linéaire de l'organe de transmission, et
- un engrenage d'équilibrage qui est accouplé du côté de l'entrée à l'entraînement de commande par moteur électrique (7) et qui comprend le premier arbre de sortie (13) et le deuxième arbre de sortie (15) et qui est réalisé de manière à transmettre et à diviser un couple du côté de l'entrée sur le premier arbre de sortie (13) et le deuxième arbre de sortie (15),
**caractérisé en ce que** le premier arbre de sortie (13) et/ou le deuxième arbre de sortie (15) comprennent chacun une broche.

2. Dispositif d'actionnement selon la revendication 1, dans lequel le premier arbre de sortie (13) et le deuxième arbre de sortie (15) sont disposés sur un axe de rotation commun et à l'opposé l'un de l'autre du côté de la sortie.

3. Dispositif d'actionnement selon l'une quelconque des revendications précédentes, qui est réalisé de telle sorte que le premier arbre de sortie (13) et le deuxième arbre de sortie (15) puissent tourner l'un par rapport à l'autre dans un premier sens d'entraînement de l'entraînement de commande par moteur électrique (7) et soient positionnés fixement l'un par rapport à l'autre dans un deuxième sens d'entraînement de l'entraînement de commande par moteur électrique (7).

4. Dispositif d'actionnement selon l'une quelconque des revendications précédentes, dans lequel le premier arbre de sortie (13) est réalisé sous forme d'arbre creux et dans lequel le deuxième arbre de sortie (15) est disposé de manière à pouvoir tourner dans l'arbre creux.

5. Dispositif d'actionnement selon l'une quelconque des revendications précédentes, dans lequel le premier arbre de sortie (13) présente un premier pignon conique (14) et le deuxième arbre de sortie (15) présente un deuxième pignon conique (16), et dans lequel l'engrenage d'équilibrage comprend un boîtier d'engrenage qui reçoit le couple du côté de l'entrée et au niveau duquel est disposé de manière rotative au moins un pignon conique planétaire par le biais duquel le premier pignon conique (14) et le deuxième pignon conique (16) sont accouplés l'un à l'autre.

6. Dispositif d'actionnement selon la revendication 5, dans lequel deux pignons coniques planétaires sont disposés l'un en face de l'autre sur un axe de rotation commun.

7. Dispositif d'actionnement selon l'une quelconque des revendications 1 à 5, dans lequel l'engrenage d'équilibrage est réalisé sous forme d'engrenage différentiel à pignons droits.

8. Dispositif d'actionnement selon la revendication 7, dans lequel l'engrenage d'équilibrage comprend un boîtier d'engrenage qui reçoit le couple du côté de l'entrée et au niveau duquel est disposé de manière rotative au moins un train planétaire à pignons droits qui accouple l'un à l'autre le premier arbre de sortie (13) et le deuxième arbre de sortie (15).

9. Dispositif d'actionnement selon la revendication 8, dans lequel l'engrenage d'équilibrage comprend au moins trois trains planétaires à pignons droits qui sont disposés uniformément autour du premier arbre de sortie (13) et du deuxième arbre de sortie (15).
